# EUROPÄISCHE PATENTSCHRIFT

(11) **EP 3 275 633 B1**
(45) Veröffentlichungstag und Bekanntmachung des Hinweises auf die Patenterteilung: **06.11.2024**
(21) Anmeldenummer: 17183899.8
(22) Anmeldetag: 29.07.2017
(51) Int. Cl.: B29C 65/20, E06B 3/96, B29L 31/00

(54) **VERFAHREN ZUM VERSCHWEISSEN VON PROFILSTÄBEN**
METHOD FOR WELDING PROFILE RODS
PROCÉDÉ DE SOUDAGE DE BARRES PROFILÉES

(30) Priorität: 29.07.2016 DE 102016114106
(43) Veröffentlichungstag der Anmeldung: 31.01.2018
(73) Patentinhaber: Urban GmbH & Co. Maschinenbau KG, 87700 Memmingen (DE)
(72) Erfinder: Hiebeler, Stefan, 87463 Dietmannsried (DE)
(74) Vertreter: Patentanwälte Olbricht, Buchhold, Keulertz Partnerschaft mbB

(56) Entgegenhaltungen:
- EP-A2- 0 920 978
- EP-A2- 1 679 180
- DE-A1- 102008 012 021
- DE-A1- 3 039 733
- JP-A- H03 176 584
- US-A1- 2015 367 568

## Beschreibung

Die Erfindung betrifft ein Verfahren zum Verschweißen von Profilstäben.

Ein solches Verfahren kann insbesondere angewandt werden, um Fensterrahmen herzustellen. Dabei werden typischerweise eine Anzahl von beispielsweise vier Profilstäben aneinander geschweißt.

Dabei sollen die Stoßkanten zwischen den Profilstäben typischerweise auch nach dem Verschweißen ein sauberes Aussehen haben. Hierfür ist gemäß typischen Verfahren nach dem Stand der Technik eine Nachbearbeitung zum Entfernen von Schweißwülsten erforderlich.

Aus der US 2015/367568 A1 geht ein Verfahren zum Verschweißen zweier Profilstäbe hervor, wobei das Verfahren folgende Schritte aufweist: 1) Bereitstellen des ersten Profilstabs und des zweiten Profilstabs, 2) wobei sich jeder Profilstab entlang seiner jeweiligen Längsachse erstreckt, 3) wobei jeder Profilstab einen Innenteil und eine diesen umgebende Umschließung aufweist, wobei ein Teil der Umschließung eine Sichtoberfläche bildet, 4) wobei an einem ersten Längsende des ersten Profilstabs eine erste außenseitige Ausnehmung ausgebildet wird, an welcher die erste Sichtoberfläche axial bezogen auf die Längsachse des ersten Profilstabs hinter einen ersten überstehenden Abschnitt des ersten Innenteils zurückgesetzt ist, und an einem zweiten Längsende des zweiten Profilstabs eine zweite außenseitige Ausnehmung ausgebildet wird, an welcher die zweite Sichtoberfläche axial bezogen auf die Längsachse des zweiten Profilstabs hinter einen zweiten überstehenden Abschnitt des zweiten Innenteils zurückgesetzt ist, 5) wobei jeder überstehende Abschnitt aus einem verschweiß- und/oder schmelzbaren Material ausgebildet ist, 6) Aufschmelzen der überstehenden Abschnitte durch Erwärmen, 7) und Zusammenbringen des ersten Längsendes und des zweiten Längsendes, so dass die aufgeschmolzenen überstehenden Abschnitte innenseitig eine materialschlüssige Verbindung zwischen dem ersten Profilstab und dem zweiten Profilstab ausbilden, und die erste Sichtoberfläche und die zweite Sichtoberfläche unmittelbar aneinandergrenzen, so dass sie zusammen eine gemeinsame Sichtoberfläche ausbilden.

Auch aus den Druckschriften JP-H03176584 A, DE 3039733 A1, EP 0920978 A2 und EP 1679180 A2 sind jeweils Verfahren zum Verschweißen zweier Profilstäbe bekannt.

Es ist deshalb eine Aufgabe der Erfindung, ein Verfahren zum Verschweißen von Profilstäben vorzusehen, welches im Vergleich zum Stand der Technik alternativ, beispielsweise besser ausgeführt ist.

Dies wird erfindungsgemäß durch ein Verfahren nach Anspruch 1 erreicht. Vorteilhafte Ausgestaltungen können beispielsweise den Unteransprüchen entnommen werden.

Die Erfindung betrifft ein Verfahren zum Verschweißen eines ersten Profilstabs und eines zweiten Profilstabs, wobei das Verfahren folgende Schritte aufweist:
- Bereitstellen des ersten Profilstabs und des zweiten Profilstabs,
- wobei sich jeder Profilstab entlang seiner jeweiligen Längsachse erstreckt,
- wobei der erste Profilstab einen ersten Innenteil und eine diesen umgebende erste Umschließung aufweist, wobei ein Teil der ersten Umschließung eine erste Sichtoberfläche bildet,
- wobei der zweite Profilstab einen zweiten Innenteil und eine diesen umgebende zweite Umschließung aufweist, wobei ein Teil der zweiten Umschließung eine zweite Sichtoberfläche bildet,
- wobei an einem ersten Längsende des ersten Profilstabs zumindest eine erste außenseitige Ausnehmung ausgebildet ist, an welcher die erste Sichtoberfläche axial bezogen auf die Längsachse des ersten Profilstabs hinter einen ersten überstehenden Abschnitt des ersten Innenteils zurückgesetzt ist, und/oder an einem zweiten Längsende des zweiten Profilstabs zumindest eine zweite außenseitige Ausnehmung ausgebildet ist, an welcher die zweite Sichtoberfläche axial bezogen auf die Längsachse des zweiten Profilstabs hinter einen zweiten überstehenden Abschnitt des zweiten Innenteils zurückgesetzt ist,
- wobei jeder überstehende Abschnitt aus einem verschweiß- und/oder schmelzbaren Material ausgebildet ist,
- Aufschmelzen der überstehenden Abschnitte durch Erwärmen, und
- Zusammenbringen des ersten Längsendes und des zweiten Längsendes, so dass die aufgeschmolzenen überstehenden Abschnitte innenseitig eine materialschlüssige Verbindung zwischen dem ersten Profilstab und dem zweiten Profilstab ausbilden, und die erste Sichtoberfläche und die zweite Sichtoberfläche unmittelbar aneinandergrenzen, so dass sie zusammen eine gemeinsame Sichtoberfläche ausbilden.

Mittels dieses Verfahrens kann erreicht werden, dass die Sichtoberflächen durch das Verfahren nicht beeinflusst werden. Insbesondere befindet sich das geschmolzene Material nicht an der Sichtoberfläche, so dass auf eine Nachbearbeitung typischerweise verzichtet werden kann und Qualitätsverluste bei Haptik und/oder Optik vermieden werden.

Besonders bevorzugt wird das Verfahren derart durchgeführt, dass nach Ausbilden der materialschlüssigen Verbindung zwischen der ersten Sichtfläche und der zweiten Sichtfläche kein aufgeschmolzenes Material vorhanden ist. Das aufgeschmolzene Material befindet sich somit typischerweise nur innerhalb der Profilstäbe oder quillt nur an Flächen vor, welche keine Sichtoberflächen sind, und an welchen somit die Wulst nicht stört.

Besonders bevorzugt bleiben die erste Sichtoberfläche und die zweite Sichtoberfläche während des Verfahrens unverändert. Damit kann vorteilhaft eine besonders gute Optik und/oder Haptik erreicht werden. Insbesondere wird diese nicht von geschmolzenem Material beeinträchtigt.

Die Sichtoberflächen werden vorteilhaft nicht miteinander verschweißt, sondern grenzen unmittelbar aneinander, ohne dass sie eine materialschlüssige Verbindung eingehen würden.

Es hat sich bewährt, wenn die erste außenseitige Ausnehmung eine axiale Länge zwischen 1 cm und 4 cm, bevorzugt 1 cm bis 3 cm, besonders bevorzug 1 cm bis 2 cm aufweist und/oder die zweite außenseitige Ausnehmung eine axiale Länge zwischen 1 cm und 4 cm, bevorzugt 1 cm bis 3 cm, besonders bevorzug 1 cm bis 2 cm aufweist. Damit kann entsprechend Material aufgeschmolzen und zum Herstellen der materialschlüssigen Verbindung verwendet werden. Mit einer größeren Länge der axialen Ausnehmung kann grundsätzlich eine größere Festigkeit erzielt werden.

Das aufgeschmolzene Material kann sich nach dem Verfahren insbesondere in Hohlräumen der Profilstäbe befinden.

Es sei verstanden, dass in einem typischen Fall sowohl der erste Profilstab wie auch der zweite Profilstab einen jeweiligen überstehenden Abschnitt aufweisen. Es kann jedoch auch vorgesehen sein, dass nur einer der Profilstäbe einen solchen überstehenden Abschnitt aufweist.

Bevorzugt ist der erste Profilstab aus einem einheitlichen Material, insbesondere einem thermoplastischen Kunststoffmaterial, ausgebildet, und/oder der zweite Profilstab ist aus einem einheitlichen Material, insbesondere einem thermoplastischen Kunststoffmaterial, ausgebildet. Dies ergibt eine einfache Ausführung. Ein thermoplastisches Kunststoffmaterial lässt sich leicht schmelzen und damit verschweißen, bleibt bei üblichen Raumtemperaturen jedoch hart.

Gemäß einer vorteilhaften Ausführung ist der erste Profilstab als Hohlprofil ausgebildet und/oder der zweite Profilstab ist als Hohlprofil ausgebildet. Damit kann eine hohe Stabilität bei geringem Gewicht erreicht werden. Außerdem können dadurch Hohlräume zur Aufnahme des aufgeschmolzenen Materials bereitgestellt werden.

Geschickter Weise ist die erste Umschließung durch eine Mehrzahl von ersten Außenflächen gebildet, wovon eine die erste Sichtoberfläche ist, und/oder die zweite Umschließung ist durch eine Mehrzahl von zweiten Außenflächen gebildet, wovon eine die zweite Sichtoberfläche ist. Die Umschließung kann insbesondere vollständig sein. Sie kann jedoch auch Öffnungen haben.

Gemäß einer Ausführung ist der erste Innenteil aus einer Mehrzahl von zueinander winklig angeordneten ersten Innenflächen gebildet, und/oder der zweite Innenteil ist aus einer Mehrzahl von zueinander winklig angeordneten zweiten Innenflächen gebildet. Damit kann eine hohe Stabilität erreicht werden.

Gemäß einer Ausführung sind der erste Profilstab und der zweite Profilstab an dem ersten Längsende und dem zweiten Längsende auf Gehrung geschnitten, so dass der erste Profilstab und der zweite Profilstab nach dem Verschweißen einen Winkel zueinander einnehmen. Beispielsweise können sie einen rechten Winkel einnehmen. Dies kann insbesondere bei der Herstellung eines üblichen Fensterrahmens vorteilhaft sein.

Es sei verstanden, dass das Verfahren beispielsweise zur Herstellung von Fensterrahmen angewandt werden kann. Dabei werden typischerweise Winkel von 90° zwischen den Profilstäben verwendet. Es kann beispielsweise auch zur Herstellung von Kämpferfenstern verwendet werden. Dabei können beispielsweise gerade Anschlagkanten zwischen den Profilstäben verwendet werden. In diesem Fall wird der V-förmige Verbindungsbereich mit einer außenseitigen Ausnehmung, insbesondere an der Sichtseite ausgestattet.

Der erste Profilstab kann insbesondere abgesehen von jeweiligen Längen spiegelsymmetrisch zum zweiten Profilstab ausgebildet sein.

Es sei verstanden, dass eine Sichtoberfläche insbesondere eine Fläche ist, welche im fertigen Produkt in einem typischen Einbauzustand zu sehen ist. Bei Fensterrahmen sind dies insbesondere diejenigen Flächen, welche einem Innenraum und einer Außenseite zugewandt sind. Auch andere Flächen können jedoch Sichtoberflächen sein.

Die erste Sichtoberfläche kann eine glatte Oberfläche aufweisen und/oder die zweite Sichtoberfläche kann eine glatte Oberfläche aufweisen. Die Sichtoberflächen können jedoch auch geeignet bearbeitet, strukturiert, gefärbt, oder sonstwie ausgeführt sein, um eine gewünschte Haptik und/oder Optik zu erreichen.

Gemäß einer Weiterbildung ist vorgesehen, dass
- ein Teil der ersten Umschließung eine weitere erste Sichtoberfläche bildet, welche der ersten Sichtoberfläche gegenüberliegt,
- ein Teil der zweiten Umschließung eine weitere zweite Sichtoberfläche bildet, welche der zweiten Sichtoberfläche gegenüberliegt,
- an dem ersten Längsende des ersten Profilstabs eine weitere erste außenseitige Ausnehmung ausgebildet ist, an welcher die weitere erste Sichtoberfläche axial bezogen auf die Längsachse des ersten Profilstabs hinter den ersten überstehenden Abschnitt des ersten Innenteils zurückgesetzt ist, und/oder an dem zweiten Längsende des zweiten Profilstabs eine weitere zweite außenseitige Ausnehmung ausgebildet ist, an welcher die weitere zweite Sichtoberfläche axial bezogen auf die Längsachse des zweiten Profilstabs hinter den zweiten überstehenden Abschnitt des zweiten Innenteils zurückgesetzt ist, und
- nach dem Ausbilden der materialschlüssigen Verbindung die weitere erste Sichtoberfläche und die weitere zweite Sichtoberfläche unmittelbar aneinandergrenzen, so dass sie zusammen eine weitere gemeinsame Sichtoberfläche ausbilden.

Damit kann eine weitere Sichtoberfläche bereitgestellt werden. Es sei verstanden, dass grundsätzlich beliebig viele Sichtoberflächen im Rahmen des Verfahrens verwendet werden können. Beispielsweise können eine, zwei, drei oder vier Sichtoberflächen verwendet werden. Es kann auch vorgesehen sein, dass die gesamte Umschließung nur Sichtoberflächen aufweist. Entsprechend ist jeder Sichtoberfläche typischerweise eine jeweilige außenseitige Ausnehmung zugeordnet.

Die Ausnehmungen können insbesondere ausgefräst sein.

Des Weiteren ist in dem Vorschlag vorteilhafter Weise vorgesehen, dass die jeweilige Ausnehmung am Längsende des ersten und/oder zweiten Profilstabes in der Materialdicke der Umschließung ausgeführt wird/ist. Hierbei ist gefunden worden, dass es bereits ausreicht, in die außenliegende Wand des Profils, seine Umschließung, zumindest an der Sichtoberfläche eine Ausnehmung einzuarbeiten, zum Beispiel eine entsprechende Ausnehmung einzufräsen oder auf sonstige Weise einzuarbeiten. Wie weiter unten noch beschrieben wird führt diese Einarbeitung der Ausnehmung zu einer gezielten Schwächung der außenliegenden Wandung, der Umschließung des Profilstabes, was günstiger Weise zu einem Nachinnenklappen des aufgeschmolzenen Materials beim Fügen der beiden Profilstäbe führt, wodurch sich der Schweißwulst im Profilinneren ausbildet und nicht an der Sichtoberfläche, wo dieser störend ist.

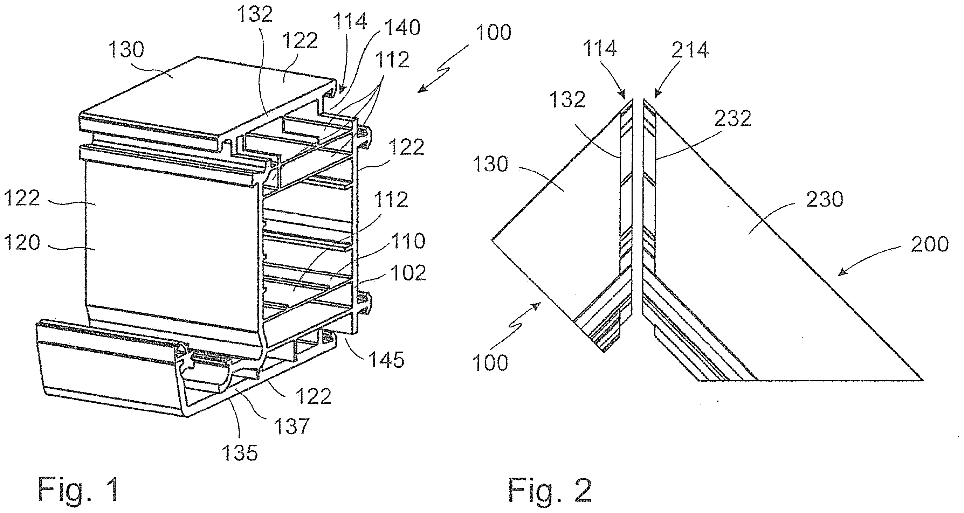

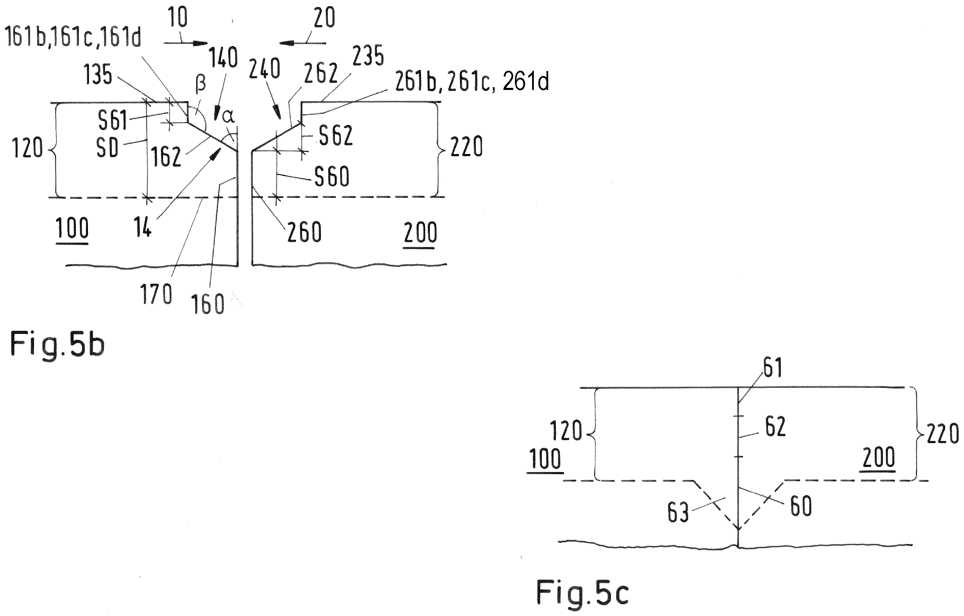

Der erfindungsgemäße Vorschlag umfasst daher mindestens zwei Varianten nämlich die erste Variante, bei welchem der außenliegende Steg oder Umschließung komplett entfernt wird, wie dies zum Beispiel in Figur 1 gezeigt ist oder bei welchem die Umschließung im Endbereich gezielt geschwächt wird, wie dies zum Beispiel in den Figuren 5b, 7 oder 9 gezeigt ist.

Bei einer bevorzugten Ausgestaltung des Vorschlags ist vorgesehen, dass die Ausnehmung von einer aus mindestens einer Teilfläche bestehenden Ausnehmungsendfläche gebildet ist. Diese Definition der Ausnehmung bezieht sich auf die beiden oben genannten Ausführungsvarianten des Vorschlages, also wo die Ausnehmungen die gesamte Materialstärke der außenliegenden Umschließung entfernt oder aber nur in die Materialstärke der Umschließung eingearbeitet ist.

Vorteilhafterweise ist gefunden worden, dass die erste Teilfläche der Ausnehmungsendfläche im Wesentlichen rechtwinklig zur Sichtoberfläche angeordnet ist. Diese erste, rechtwinklig angeordnete Teilfläche begrenzt dann die Sichtoberfläche und wird mit der analogen Teilfläche an dem zweiten Profilstab stumpf aneinanderstoßen, wenn der Fügeprozess abgeschlossen ist und schweißwulstlos an diesem anschließen.

Des Weiteren ist vorgesehen, dass sich an die erste Teilfläche unter einen stumpfen Winkel eine zweite Teilfläche anschließt, die, mittelbar oder unmittelbar, an die endseitige Begrenzungsfläche des überstehenden Abschnittes anschließt. Diese Ausgestaltung wird günstiger Weise dazu führen, wie weiter unten beschrieben ist, dass sich bei dem Fügeprozess der Schweißwulst innen bildet und an der Sichtoberfläche die beiden zusammengefügten Profilstäbe stumpf aneinanderstoßen.

Erfindungsgemäß ist vorgesehen, dass das Einarbeiten der Ausnehmung durch eine spanabhebende Bearbeitung vor dem Aufschmelzen erfolgt. Um dies zu realisieren gibt es mehrere Varianten. Zunächst ist es möglich, dass die Profilstäbe mit einer entsprechenden Ausnehmung in einer separaten Station hergerichtet werden. Die spanabhebende Bearbeitung kann zum Beispiel ein Fräs- oder Sägeprozess sein. In günstiger Weise ist aber eine Kombination von Fräsen mit Heizen in ein und derselben Aufspannung vorgesehen, da dies zu einem schnelleren und qualitativ höherwertigen Ergebnis führt.

Grundsätzlich ist es aber auch möglich, dass zunächst eine Vorerwärmung stattfindet und hernach die Ausnehmung eingearbeitet wird. Dabei kann dieser Vorerwärmungsprozess der Aufschmelzprozess sein oder der Aufschmelzprozess folgt als zweiter Erwärmungsschritt danach.

Der erfindungsgemäße Vorschlag legt sich daher nicht auf die Reihenfolge des Einarbeiten der Ausnehmung und des Erwärmen fest. Alle diesbezüglichen Varianten gehören zur Offenbarung der Erfindung.

Geschickter Weise ist vorgesehen, dass der erste und zweite Profilstab nach deren Bereitstellung je von einer, längs einer Bewegungsrichtung bewegbaren Aufspannvorrichtung aufgespannt wird und diese Aufspannung während des Verschweißens nicht verändert wird. Hierunter wird insbesondere verstanden, dass der jeweilige Profilstab fest in seiner Aufspannung gelagert ist und natürlich in seiner Aufspannvorrichtung bewegbar ist, um zum Beispiel den Fügeprozess mit dem anderen Profilstab auszuführen, der in gleicher Weise gelagert ist. Dass der Profilstab möglichst automatisiert bewegt wird, ist hinlänglich bekannt, da mehrere unterschiedliche Zustellbewegungen bei der Herstellung eines Fensterrahmenflügels usw. notwendig sind, was eine Bewegung des Profilstabes bedingt. Hierzu gehört zum Beispiel das Anstellen des Profilstabes gegen den Heizspiegel zum Aufschmelzen des Endbereiches, wie auch die nachfolgende Fügebewegung mit dem zweiten Profilstab. Pfiffig hierbei ist allerdings, dass der Profilstab als Werkstück in der Aufspannvorrichtung während des Einarbeiten der Ausnehmung, zum Beispiel bei einem Frässchritt verbleibt und so während jedem Bearbeitungsschritt (Fräsen, Heizen bzw. Heizen, Fräsen und Fügen) hochgenau positioniert ist, was die gesamte Bearbeitungskette sehr positiv beeinflusst.

Dieser Vorschlag geht einher mit einer hohen Effizienz eines solchen Verfahrens, gekoppelt mit hoher Eckfestigkeit und optimaler optischer Gestaltung des Eckbereiches, weil die Ausbildung eines unschönen Schweißwulstes an der Sichtoberfläche zuverlässig vermieden wird.

Erfindungsgemäß ist vorgesehen, dass nach der Bereitstellung der Profilstäbe, die Endseite des Profilstabes voraufgeschmolzen wird. Auch hierin liegt ein sehr pfiffiger Vorschlag. Das Vorschmelzen geht einher mit einer ersten Anstellbewegung des Profilstabes gegen den Heizspiegel. Dabei wird der Profilstab mit einer entsprechenden Anstellkraft gegen den Heizspiegel gedrückt und das sich erwärmende, dadurch plastifizierte Kunststoffmaterial (bevorzugt natürlich ein Thermoplast wie PVC) weicht in transversaler Richtung aus. Insbesondere wird das ausweichende Material auch nach oben bzw. zur Außenseite, zur Sichtoberfläche hin ausweichen, was eigentlich schlussendlich nicht erwünscht ist. Der Vorerwärm-Prozessschritt wird aber in geeigneter Weise ausgeführt, dann hernach der Profilstab wieder vom Heizspiegel entfernt, also zurückgezogen, wobei sich dann, in transversaler Richtung, ein Schweißüberstand (der Beginn eines Schweißwulstes, im Zusammenwirken mit dem zweiten Profil) ausgebildet hat, der hernach abgefräst wird.

Erfindungsgemäß wird durch den mit mindestens einer, bevorzugt mehreren NC Achse gesteuerten Fräsaggregat genau der Bereich des Kunststoffmateriales weggefräst, der hernach einen sichtbaren Schweißwulst ausbilden könnte.

Erfindungsgemäß ist folgender Prozessablauf vorgesehen:
Aufspannen der unbearbeiteten Profilstäbe (auf Maß und Gehrung geschnitten, aber ohne Ausnehmung ) - Einarbeiten der Ausnehmung - Voraufschmelzen - Entfernen des Schweißüberstandes durch Abfräsen - Aufschmelzen - Fügen Vorteilhafter Weise ist vorgesehen, dass die jeweilige Sichtoberfläche der Profilstäbe zumindest teilweise von einer Schale, vorzugsweise einer Aluminiumschale verdeckt ist und das Ende der Schale mit der ersten Teilfläche fluchtet. Geschickterweise schließt dabei das Ende der Aluminiumsschale mit der Ausnehmung ab und verdeckt nach dem Fügeprozess die Eckverbindung.

Des Weiteren ist in günstiger Weise vorgesehen, dass sich die Schale über Abstützelemente auf der Sichtoberfläche abstützt und eine zusätzliche Abtragung am Profilstabende im Bereich der Abstützelemente eingearbeitet wird. Die zusätzliche Abtragung wird genau dort ausgeführt, wo sich die Schale über Abstützelemente auf der Sichtoberfläche abstützt. Durch die Abtragung wird Raum geschaffen, wo sich verschmolzenes Kunststoffmaterial eventuell ausdehnen könnte und anderenfalls über die Abstützelemente die Aluminiumsschale in unschöner Weise vom Profil hochdrückt wird. Da aber gerade im Sichtbereich die Aluminiumsschale vorgesehen ist, kann diese zusätzliche Abtragung eingearbeitet werden, sie wird von den stumpf und spaltfrei aneinanderstoßenden Aluminiumsschalen der beiden, die Eckverbindung bildenden Profilstäben verdeckt.

Die in dieser Anmeldung vorgestellte Erfindung ist sehr variabel und flexibel realisierbar. Ausdrücklich wird darauf hingewiesen, dass alle verschiedene Aspekte der in dieser Anmeldung beschriebenen Offenbarung miteinander kombiniert werden können.

Insbesondere umfasst die Offenbarung auch die folgenden Kombinationen der vorgeschriebenen Verfahren:
Entfernen der Sichtoberfläche, wie in Figur 1 gezeigt, mit dem beschriebenen Prozess des Voraufschmelzens.

Schwächen der Umschließung, wie in Figur 5b, 7,8 und 9 gezeigt, mit dem beschriebenen Prozess des Voraufschmelzens.

Die Erfindung betrifft des Weiteren eine Profilstabanordnung mit einem ersten Profilstab und einem zweiten Profilstab, welche mittels eines erfindungsgemäßen Verfahrens miteinander verschweißt wurden. Dabei kann auf alle beschriebenen Ausführungen und Varianten des Verfahrens zurückgegriffen werden.

In der Zeichnung ist die Erfindung schematisch dargestellt. Es zeigen:
- Fig. 1: einen Profilstab in perspektivischer Ansicht zur Verwendung in dem erfindungsgemäßen Verfahren,
- Fig. 2: zwei Profilstäbe, welche auf Gehrung geschnitten sind, in einer Draufsicht, zur Verwendung in dem erfindungsgemäßen Verfahren,
- Fig. 3: die Profilstäbe von Figur 2 in einer perspektivischen Ansicht,
- Fig. 4: die Profilstäbe von Figur 2 in einer Seitenansicht,
- Fig. 5a, 6: je in einer 3-dimensionalen Ansicht das Einarbeiten der Ausnehmung in den Profilstab nach der Erfindung,
- Fig. 5b, 5c: je in einer schematischen Seitenansicht die Situation des Verschweißens der beiden Profilstäbe vor dem eigentlichen Verschweißen (Figur 5b) und nach dem Verschweißen (Figur 5c) nach einem ersten Ausführungsbeispiel der Erfindung,
- Fig. 7: in einer schematischen Seitenansicht die Situation des Verschweißens der beiden Profilstäbe vor dem eigentlichen Verschweißen nach einem zweiten Ausführungsbeispiel der Erfindung,
- Fig. 8, 9: je in einer schematischen Seitenansicht weitere Varianten von Ausführungsbeispielen des erfindungsgemäßen Verfahrens.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Figur 1 zeigt einen Profilstab 100 in einer perspektivischen Ansicht. Der Profilstab 100 erstreckt sich entlang einer nicht eingezeichneten, aber deutlich erkennbaren Längsachse in üblicher Weise.

Der Profilstab 100 ist dazu ausgebildet, in einem Verfahren zum Verschweißen zweier Profilstäbe gemäß einem Ausführungsbeispiel der Erfindung verwendet zu werden.

Der Profilstab 100 wird in den weiteren Figuren, in welchen jeweils zwei Profilstäbe zu sehen sind, als erster Profilstab bezeichnet werden. Auch im Folgenden wird er somit als erster Profilstab 100 bezeichnet werden.

Der erste Profilstab 100 weist ein erstes Innenteil 110 sowie eine erste Umschließung 120 auf. Insgesamt ist der erste Profilstab in Form eines Hohlprofils ausgebildet.

Das erste Innenteil 110 weist eine Anzahl von ersten Innenflächen 112 auf. Diese sind winklig zueinander angeordnet, wie dies in Figur 1 gut zu erkennen ist. Im Wesentlichen sind die Innenflächen 112 jeweils entweder parallel oder quer zu einer anderen Innenfläche 112 ausgerichtet. Sie erstrecken sich entlang der Längsachse des ersten Profilstabs 100.

Die erste Umschließung 120 ist durch eine Mehrzahl von Außenflächen 122 gebildet. Diese bilden eine Außenseite des ersten Profilstabs 100 in einer Richtung quer zur Längsachse.

Eine der Außenflächen 122, nämlich diejenige, welche in Figur 1 nach oben weist, ist als erste Sichtoberfläche 130 ausgebildet. Diese erste Sichtoberfläche 130 ist in einer Art und Weise ausgebildet, dass sie eine ansehnliche Fläche bildet. Dies kann insbesondere eine Seite eines Fensterrahmens sein, welche in einer typischen Einbausituation einem Innenraum oder einem Außenbereich zugeordnet ist. Die erste Sichtoberfläche 130 ist hierzu insbesondere glatt und mit einer geeigneten Farbe ausgeführt.

Gegenüberliegend zur ersten Sichtoberfläche 130 ist eine in die entgegensetzte Richtung weisende Außenfläche 122 als weitere erste Sichtoberfläche 135 ausgebildet. Für die Eigenschaften der weiteren ersten Sichtoberfläche 135 gilt das für die erste Sichtoberfläche 130 geschriebene entsprechend.

Figur 1 zeigt den ersten Profilstab 100 benachbart zu einem ersten axialen Ende 102.

Unmittelbar angrenzend an das erste axiale Ende 102 ist oben eine erste außenseitige Ausnehmung 140 ausgebildet. Diese führt dazu dass die erste Sichtoberfläche 130 nicht ganz bis zum ersten axialen Ende 102 reicht, sondern vor diesem endet. Entsprechend ist unten eine weitere erste außenseitige Ausnehmung 145 ausgebildet. Diese führt dazu, dass die zweite Sichtoberfläche 135 nicht ganz bis zum ersten axialen Ende 102 reicht, sondern vor diesem endet.

Durch die außenseitigen Ausnehmungen 140, 145 bildet der erste Innenteil 110 einen ersten überstehenden Abschnitt 114. Dieser steht also insbesondere über erkennbare Kanten 132, 137 hervor, an welchen die erste Sichtoberfläche 130 bzw. die weitere erste Sichtoberfläche 135 enden. Dieser Abschnitt 114 hat zum Beispiel eine axiale Länge von zum Beispiel 1, 2, 3 oder 4 cm, sowie Abstufungen dazwischen. Der Abschnitt 114 endet mit der Kante 132, die eine Höhe (rechtwinklig zur Längserstreckung des Abschnittes 114) von 0,3cm, 0,5cm, 0,7cm, 1,0cm, 1,2cm, 1,5m, 1,7cm oder 2,0 cm aufweisen kann. Die Erfindung umfasst auch alle Verhältnisse der axialen Länge des Abschnitts 114 zur Höhe der Kante 132 in den angegebenen Dimensionen.

Ebenso wie der Rest des ersten Profilstabs 100 ist der erste überstehende Abschnitt 114 aus einem thermoplastischen Material ausgebildet. Dies bedeutet insbesondere, dass der erste überstehende Abschnitt durch Erwärmung aufgeschmolzen werden kann. Dies kann verwendet werden, um den ersten Profilstab 100 mit einem zweiten Profilstab 200 zu verschweißen, wie dies weiter unten näher beschrieben werden wird.

Der in Figur 1 dargestellte erste Profilstab 100 ist an dem ersten axialen Ende 102 quer zu seiner Längsrichtung geschnitten. An diesen könnte somit beispielsweise ein zweiter Profilstab 200 angeschweißt werden, welcher eine Verlängerung des ersten Profilstabs 100 darstellt, sofern der zweite Profilstab 200 genauso oder ähnlich ausgebildet ist.

Der nachfolgend mit Bezug auf die Figuren 2 bis 4 beschriebene Anwendungsfall ist jedoch derart gestaltet, dass ein jeweiliger Profilstab am zu verschweißenden axialen Ende nicht quer, sondern auf Gehrung, also im 45°-Winkel zur Längsachse geschnitten ist. Dadurch können zwei Profilstäbe derart miteinander verschweißt werden, dass sie in einem rechten Winkel zueinander angeordnet sind. Dies wird beispielsweise bei einer typischen Herstellung eines Fensterrahmens angewandt.

Figur 2 zeigt den ersten Profilstab 100, welcher grundsätzlich wie in Figur 1 ausgebildet ist, in Abwandlung dazu jedoch ein auf Gehrung, also im Winkel von 45° zur Längsachse geschnittenes erstes axiales Ende 102 aufweist. Außerdem zeigt Figur 2 einen zweiten Profilstab 200.

Der erste Profilstab 100 ist bis auf die bereits erwähnte Änderung so ausgebildet, wie dies in Figur 1 zu sehen ist und mit Bezug auf Figur 1 beschrieben wurde. Auf eine Wiederholung wird verzichtet.

Der zweite Profilstab 200 ist spiegelsymmetrisch zum ersten Profilstab 100 ausgebildet. Unter dieser Maßgabe wird bezüglich des zweiten Profilstabs 200 auf die Beschreibung des ersten Profilstabs 100 verwiesen. Dabei ist lediglich zu beachten, dass für den zweiten Profilstab 200 im Vergleich zum ersten Profilstab 100 alle verwendeten Bezugszeichen um einen Wert von 100 erhöht werden. Außerdem werden alle bei dem ersten Profilstab 100 als "erste" Elemente bezeichnete Elemente bei dem zweiten Profilstab 200 als "zweite" Elemente bezeichnet.

Somit weist der zweite Profilstab 200 ein zweites axiales Ende 202, einen zweiten Innenteil 210 mit zweiten Innenflächen 212 und einem zweiten überstehenden Abschnitt 214, eine zweite Umschließung 220 mit zweiten Außenflächen 222, darunter eine zweite Sichtoberfläche 230 und eine weitere zweite Sichtoberfläche 235, Kanten 232, 237, eine zweite außenseitige Ausnehmung 240 und eine weitere zweite außenseitige Ausnehmung 245 auf.

Figur 2 ist eine Draufsicht, in welcher insbesondere die erste Sichtoberfläche 130 und die zweite Sichtoberfläche 230 zu sehen sind. Über deren Kanten 132, 232 stehen wie ebenfalls gut zu sehen ist der erste überstehende Abschnitt 114 und der zweite überstehende Abschnitt 214 hervor. Diese weisen aufeinander zu, wenn die Profilstäbe wie gezeigt angeordnet sind.

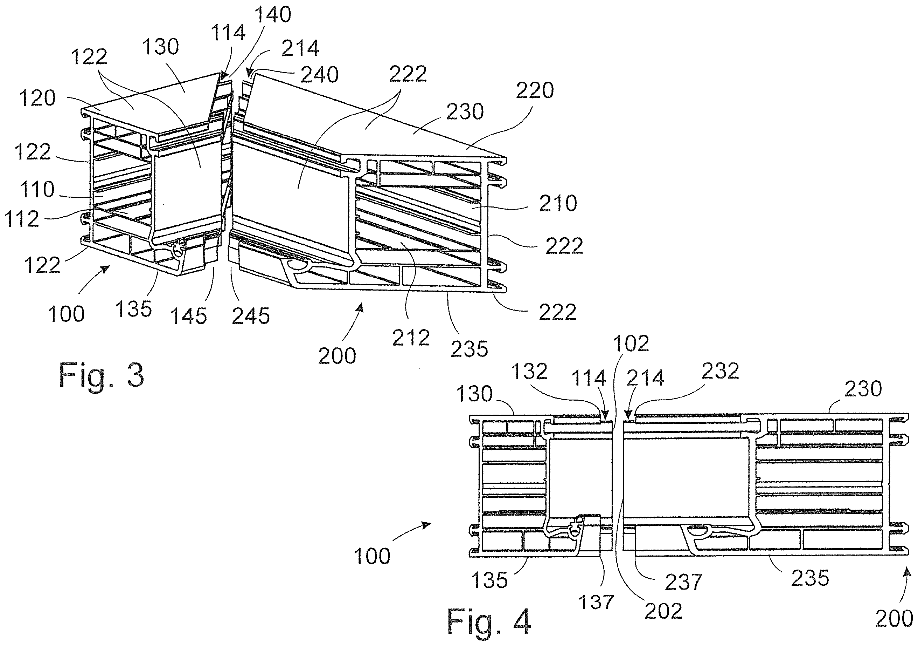

Figur 3 zeigt die Profilstäbe 100, 200 von Figur 2 in einer perspektivischen Ansicht, Figur 4 zeigt sie in einer Seitenansicht.

Es sei verstanden, dass aus Gründen der besseren Darstellung in den Figuren 2 bis 4 nicht jeweils alle Bezugszeichen dargestellt sind.

Ausgehend von dem in den Figuren 2 bis 4 dargestellten Zustand ist es nun möglich, die Profilstäbe 100, 200 gemäß einem Ausführungsbeispiel des erfindungsgemäßen Verfahrens zu verschweißen. Dies wird nachfolgend beschrieben werden.

Hierzu wird zunächst ein nicht dargestelltes flächiges Heizelement zwischen den überstehenden Abschnitten 114, 214 angeordnet. Das Heizelement wird erhitzt, so dass sich die überstehenden Abschnitte 114, 214 erwärmen. Da diese, wie bereits erwähnt, aus einem thermoplastischen Material ausgebildet sind, schmelzen sie dabei auf.

Dann werden der erste Profilstab 100 und der zweite Profilstab 200 zusammengedrückt, so dass die beiden überstehenden Abschnitte 114, 214 miteinander in Kontakt kommen. Da beide geschmolzen sind und somit fließfähig sind, vermischen sie sich dabei, so dass nach dem Abkühlen eine materialschlüssige Verbindung ausgebildet wird.

Die Profilstäbe 100, 200 werden so weit aufeinander zu bewegt, bis sich die Kanten 132, 232 der ersten und zweiten Sichtoberflächen 130, 230 sowie die Kanten 137, 237 der weiteren ersten und weiteren zweiten Sichtoberflächen 135, 235 berühren. Diese kommen jeweils miteinander in Kontakt, ohne dass die Sichtoberflächen 130, 230 während des Vorgangs verändert wurden. Der Schmelzvorgang hat sich vielmehr nur zwischen den Sichtoberflächen 130, 230 und den weiteren Sichtoberflächen 135, 235 abgespielt und geschmolzenes Material ist nur innerhalb der Profilstäbe 100, 200 vorhanden, nicht jedoch an den Sichtoberflächen 130, 135, 230, 235. Geschmolzenes Material beeinträchtigt also nicht das Erscheinungsbild an den Sichtoberflächen 130, 135, 230, 235, so dass insbesondere typischerweise auf eine Nachbearbeitung verzichtet werden kann. Trotzdem wird eine stabile materialschlüssige Verbindung angewandt.

Es sei verstanden, dass das hier für das Verschweißen von zwei Profilstäben 100, 200 beschriebene Verfahren auch für mehr Profilstäbe angewandt werden kann. Beispielsweise kann aus vier Profilstäben ein typischer Fensterrahmen aufgebaut werden.

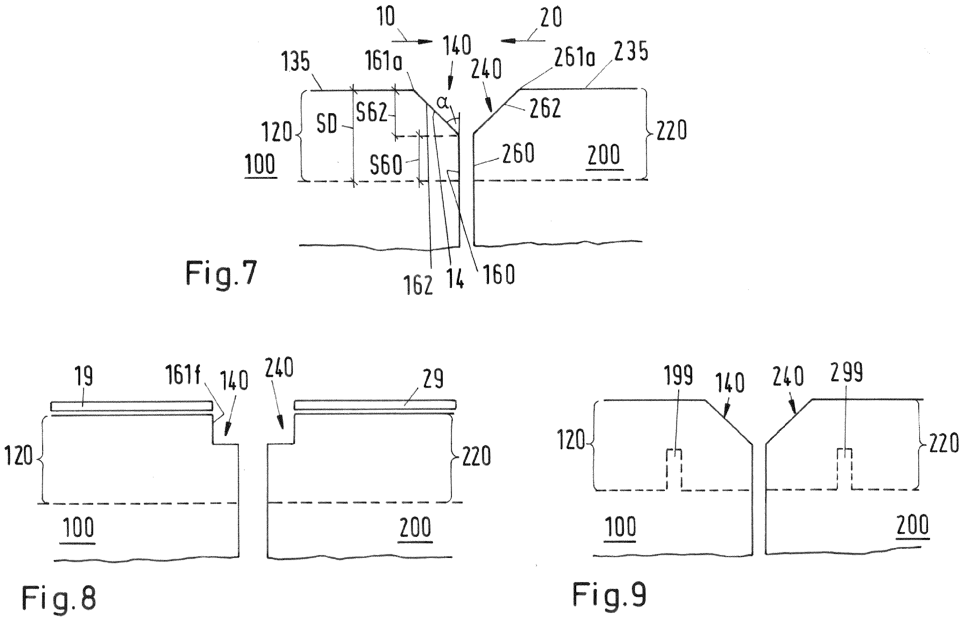

Der erfindungsgemäße Vorschlag, der insbesondere in Figur 1 beschrieben ist, wird in dem Ausführungsbeispiel nach Figur 7 weiterentwickelt. Ist in Figur 1 eine Ausnehmung 140 vorgesehen, die die gesamte Materialstärke der Umschließung 120 (welche auch die Sichtoberfläche 130 umfasst) entfernt, so wird in dem Ausführungsbeispiel nach Figur 7 die Ausnehmung 140 nur in der Materialstärke der Umschließung 120 ausgeführt. Anders formuliert ist der Maßstab von Figur 1 und Figur 7 nicht vergleichbar, Figur 7 zeigt eine deutliche Vergrößerung eines Teils des Profilstabes 100.

Im Herstellungsprozess der Schweißverbindung sind die Endbereiche der Profilstab 100,200 so stark erwärmt, dass diese plastifiziert sind. Der hierfür notwendige Heizspiegel ist nicht mehr zu sehen, er ist bereits aus dem Bereich zwischen den beiden Profilstäben 100,200 entfernt. Die beiden Profilstäbe 100,200 werden nunmehr (siehe die entsprechenden entgegengesetzt orientierten Pfeile 10,20) zusammengeführt oder zusammengefügt, um die Verschweißung zu erreichen.

Die Stegdicke bzw. Materialdicke der Umschließung 120 und 220 ist mit dem Bezugszeichen SD gekennzeichnet. In Realität beträgt diese wenige Millimeter. Im Vergleich zu dem Ausführungsbeispiel nach Figur 1 ist hier die Ausnehmung 140, 240 auch nicht in Ansicht L-förmig, sondern als Schräge 162 ausgeführt. Die Schräge 162 schließt dabei mit der Gehrungsfläche bzw. Abschnittsfläche einen spitzen Winkel α ein. Die Schräge 162 ist dabei die erste und hier auch einzige Teilfläche der Ausnehmungsendfläche 14, die Ausnehmungsendfläche 14 begrenzt dabei die Ausnehmung 140. Aus Übersichtlichkeitsgründen ist diese Ausnehmungsendfläche 14 nur an dem Profilstab 100 gezeigt die Situation ist bei dem zweiten Profilstab 200 analog.

Es ergibt sich so eine partielle Schwächung oder Reduktion der Stegdicke SD der Umhüllung gerade im Endbereich des Profils. Diese Ausgestaltung ist bei den beiden zu verschweißenden Profilstäben 100,200 identisch.

Der Pfiff dieses Ausführungsbeispiels der Erfindung (und auch des Ausführungsbeispiels nach Figur 5b bzw. 9) liegt darin, dass gefunden wurde, dass die Ausbildung eines an der Außenseite sichtbaren Schweißwulste geschickter Weise dadurch vermieden wird, wenn in geeigneter Weise die Materialstärke SD oder das Material des äußersten Steges, der Umschließung 120, gezielt geschwächt wird. Da in diesen Ausführungsbeispielen die Ausnehmung 140,240 nur in der Materialstärke SD des außen liegenden Materialsteges, der Umschließung 120,220, angeordnet ist, wird auch die Gesamtfestigkeit der Schweißverbindung, die gerade im Eckbereich benötigt wird, nur im geringen Maße reduziert. Dieser Vorschlag der Erfindung kombiniert also das Bedürfnis schweißwulstlos zu verschweißen, mit einer hohen mechanischen Festigkeit der so erzeugten (Eck-)Verbindung. Dabei ist zu betonen, dass zum Erreichen dieses Zieles kein Niederhalter oder Drücker bzw. Stempel auf den parallel zur Gehrungsfläche verlaufenden Ausnehmung 140,240 (oder Nut) notwendig ist.

Die spezielle Ausgestaltung des Endbereiches der Umschließung 120 wird durch mehrere Parameter beschrieben. Mit dem Bezugszeichen 160, 260 wird die Begrenzungsfläche bzw. Überstand oder der Bereich des Profilstabes beschrieben, der von der Tiefe (in axialer Richtung) her am meisten erwärmt, das heißt aufgeschmolzen oder "abgebrannt" (wie es in der Fachsprache bezeichnet wird) wird.

Allgemein kennzeichnet hier, wie auch in der sonstigen Beschreibung dieser Erfindung, die erste Ziffer 1 bei einem dreistelligen Bezugszeichen das jeweilige Element am Profilstab 100, die erste Ziffer 2 bei einem dreistelligen Bezugszeichen das jeweilige Element am Profilstab 200.

Die Schräge 162,262 schließt mit der Begrenzungsfläche 160,260 einen spitzen Winkel α ein. Im Bereich der Kante 161a,261a erfolgt idealerweise kein Verschweißen, also materialidentisches Durchdringen der beiden Profilstabmaterialien. Die Stegdicke SD beschreibt die Dicke des Materiales der Umschließung 120,220. Das Bezugszeichen S60 beschreibt die Höhe der endseitigen Begrenzungsfläche 160,260 des Steges bzw. Umschließung 120, 220. Der Quotient der Höhe S 60 zu Stegdicke SD liegt in dem Intervall von 0-80 %, bevorzugt von 10-70 %, insbesondere bevorzugt von 20-60 %.

Für diesen Parameter wird ein Intervall angegeben, das durch eine obere und untere Grenze beschrieben ist. Als Obergrenze sind zum Beispiel dabei folgende Werte vorgesehen: 90%, 80%, 70%, 60%, 50%, 40%, 30%. Als Untergrenze gelten zum Beispiel folgende Werte: 70%, 60%, 50%, 40%, 30%, 20%, 10%. Die Offenbarung dieser Anmeldung umfasst die Menge von allen Intervallen, die durch alle möglichen, technisch richtigen Kombinationen der vorgenannten Ober- und Untergrenzen besteht.

Sowohl in Figur 7, wie aber insbesondere in Figur 5b werden die Bezugszeichen 161 und 261 verwendet, wobei diese Bezugszeichen in Figur 7 nur eine Kante 161a, 261a beschreiben, wohingegen sie in Figur 5b eine im wesentlichen rechtwinklig orientierte Fläche 161b, 261b kennzeichnet. Es ist klar, dass die Position dieser Elemente in beiden Figuren die gleiche ist, wobei in Figur 7 die Kante 161a,261a keine Höhe aufweist, aber eben den Übergang zu der Schräge 162,262 definiert und zumindest die axiale Lage des theoretischen Fügeendpunktes am Profilstab bestimmt.

In Figur 5b ist fast die gleiche Situation gezeigt wie in Figur 7. Zusätzlich zu der Ausgestaltung nach Figur 7 zeigt die Figur 5b eine (weitere) Teilfläche 161c,261c der Ausnehmungsendfläche 14, welche im Wesentlichen rechtwinklig zur Sichtoberfläche 135,235 angeordnet ist. In dem hier gezeigten Ausführungsbeispiel ist die Ausnehmungsendfläche 14 von zwei Teilflächen 161c, 162b gebildet. An die soeben beschriebene erste Teilfläche 161c, sie ist im Wesentlichen rechtwinklig zur Sichtoberfläche 135,235 orientiert, schließt sich dann die Schräge 162 (als 2. Teilfläche) an. Dabei schließt die Schräge 162 mit der absatzartigen ersten Teilfläche 161c einen stumpfen Winkel β ein.

Der Endbereich der jeweiligen Profilstäbe 100,200 ist gemäß dem Ausführungsbeispiel nach Figur 5b, gerade im Bereich der Materialstärke der Umschließung 120,220, von mehreren Parametern gekennzeichnet. Zu einem ist dies die Höhe S61 des rechtwinkligen Absatzes 161d, des weiteren die Höhe S62 der Schräge 262 und wiederum die Höhe S60 der endseitigen Begrenzungsfläche 160, 260 des Steges bzw. der Umschließung 120,200. Die Höhe bezieht sich dabei auf ein Maß rechtwinklig zur Längserstreckung des Profilstabes.

Bei einer Stegdicke SD von ca. 2,5 bis 3 oder 4 mm beträgt die Höhe S61 0,3; 0,5 oder auch 1 mm. Daher liegt das Verhältnis der Höhe S61 zur Stegdicke SD in einem Intervall von 5% bis 60%, bevorzugt 10 % bis 40 %.

Für diesen Parameter (Verhältnis der Höhe S61 zur Stegdicke SD) wird ein Intervall angegeben, das durch eine obere und untere Grenze beschrieben ist. Als Obergrenze sind zum Beispiel dabei folgende Werte vorgesehen: 60%, 50%, 40%, 30%. Als Untergrenze gelten zum Beispiel folgende Werte: 25%, 20%, 10%,5%. Die Offenbarung dieser Anmeldung umfasst die Menge von allen Intervallen, die durch alle möglichen, technisch richtigen Kombinationen der vorgenannten Ober- und Untergrenzen besteht.

Für den Winkel α ist typischerweise ein Intervall von 30-60°, bevorzugt von 40-50°, insbesondere 45° vorgesehen. Für den Winkel β ist typischerweise ein Intervall von 120-150°, bevorzugt von 125-145°, bevorzugt 135° vorgesehen. Bevorzugt beträgt der axiale Überstand der endseitigen Begrenzungsfläche 160 gegenüber dem Absatz 161d einige Millimeter bis zu wenigen Zentimetern, zum Beispiel 0,5 mm, 1 cm, 1,5 cm, 2 cm. Diesen Überstand gilt es beim Verbinden d.h. beim Verschweißen zu verschmelzen bzw. abzubrennen.

Es ist klar, je größer dieser Überstand ist, desto mehr Material steht zur Verfügung, um den nicht gewünschten Schweißwulst auszubilden. Es ist daher Ziel des Verschweißens, nur so wenig Material aufzuschmelzen d.h. zu erwärmen, dass nur ein minimaler Schweißwulst bei maximaler Festigkeit entsteht. Daher ist vorgesehen, dass der Quotient des Überstandes mit der Stegdicke SD beispielsweise in einem Intervall von 150 % bis 400 % liegt.

Für diesen Parameter (Quotient des Überstandes mit der Stegdicke SD) wird ein Intervall angegeben, das durch eine obere und untere Grenze beschrieben ist. Als Obergrenze sind zum Beispiel dabei folgende Werte vorgesehen: 600%, 500%, 400%, 300%. Als Untergrenze gelten zum Beispiel folgende Werte: 100%, 150%, 200%, 250%, 300% und 350%. Die Offenbarung dieser Anmeldung umfasst die Menge von allen Intervallen, die durch alle möglichen, technisch richtigen Kombinationen der vorgenannten Ober- und Untergrenzen besteht.

Zu beachten ist, dass sich in dem Endbereich des außenliegenden Steges des Profilstabes 100, der Umschließung 120, die nur wenige Millimeter stark ist, drei unterschiedliche Zonen ausbilden die bei dem Verschweißprozess auch vollständig unterschiedliche Funktionen ausfüllen.

Dies wird insbesondere mithilfe von Figur 5c klar. Bei Figur 5b wurde beschrieben, dass die beiden aufgeschmolzenen, also erwärmten Enden der Profilstäbe 100,200, entsprechend der einander zugewandten Pfeile 10,20 bei der Fügebewegung aufeinander zu bewegt werden und die erwärmten Bereiche der Profilenden einander berühren und sich durchdringen, also miteinander verschmelzen. In Transversalrichtung zur Bewegungsrichtung muss das sich hier durchmischende Material ausweichen und sucht sich dabei den Weg des geringsten mechanischen Widerstandes. Dieser Weg ist dem erwärmten Material vorgegeben. Die Schräge 162 ist steifer wie der zur Sichtoberfläche 135 parallel verlaufende innere Rand 170 der Umschließung 120. Hieraus resultiert, dass der erwähnte Überstand bevorzugt in das Profilinnere, hier also nach unten, ausweicht und dort den Schweißwulst 63 ausbildet, wie dies in Figur 5C gezeigt ist. In dem hier markierten Bereich 60 bildet sich also tatsächlich eine gute Verschmelzung d.h. Durchdringung der Materialien der beiden Profilstäbe 100,200 aus.

In dem darüber liegenden Bereich 62, der mit den Schrägen 162 und 262 im Bezug steht, ist die Durchdringung nicht ganz so gut, da hier eine etwas größere Oberfläche zum Volumen zur Verfügung steht und daher dieser Bereich etwas schneller abkühlt, was bei dem Verschweißen zu einer etwas schlechteren Materialdurchdringung führt. Gleichzeitig ist dieses Material aber etwas steifer, was eben gerade den Effekt des nach unten Klappen des Schweißwulstes positiv unterstützt.

Der oberste Sektor 61 kommuniziert mit den beiden Absätzen 161d und 262d, die idealerweise mit dem Heizspiegel nicht in Berührung gekommen sind und nur indirekt, gering erwärmt wurden und daher auch keine Plastizität aufweisen und nach dem Fügen stumpf aneinanderstoßen. Diese sind idealerweise nicht miteinander verschweißt.

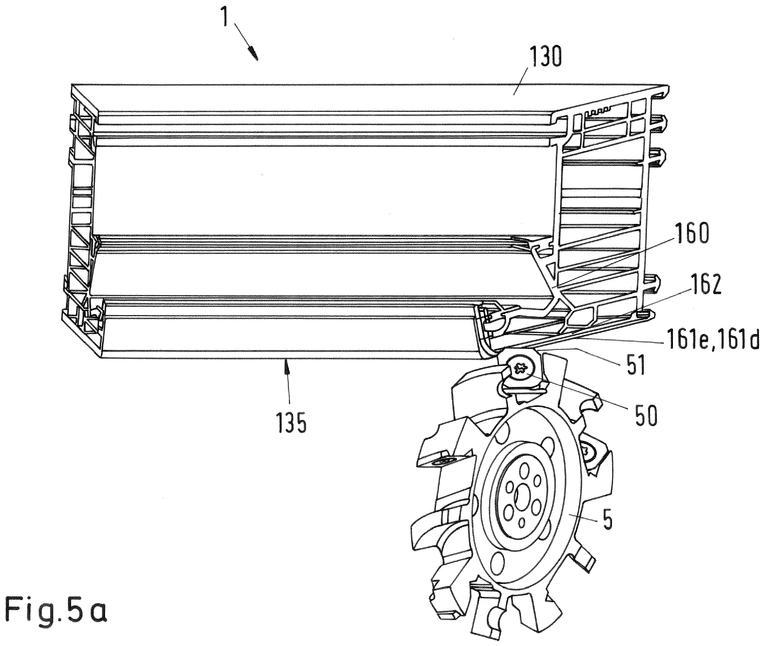

Figur 5a zeigt den Bearbeitungsschritt, wie die Ausnehmung 140 in die Materialstärke der Umschließung 120 eingearbeitet wird. Hierfür ist ein Fräswerkzeug 5 vorgesehen. Mit 160,161e und 162 sind die jeweiligen Bereiche der endseitigen Begrenzungsfläche markiert, die den Überstand 160 (Bereich mit normalen Abbrand), die die Schräge 162 (Bereich mit reduzierten Abbrand) ausbildet und die den (rechtwinkligen) Absatz 161d (Bereich ohne Abbrand) bildet. Das Fräswerkzeug 5 besitzt eine Mehrzahl von Messerschneiden 50, die an ihren Eckbereichen je eine Phase 51 aufweist und so die Schräge 162 in das Profilende des Profilstabes 100 einarbeitet. Es ist klar, dass das Fräswerkzeug 5 eine spanabhebende Bearbeitung ausführt. Je nachdem, wie die Lage des Fräswerkzeug 5 zur Sichtoberfläche 135 ist, also der Abstand der Rotationsachse des Fräswerkzeuges zu dieser Sichtoberfläche 135, bildet sich eine größere oder kleinere Schräge 162 aus und definiert letztendlich die Ausgestaltung des Profilendes, welche danach mit dem Heizspiegel erwärmt wird und dann mit dem idealerweise in gleicher Weise vorbereiteten zweiten Profilstab 200 verschweißt also mechanisch fest verbunden wird. Der Fräser 5 wird dabei entlang der Gehrungsfläche, spitzwinklig zur Längserstreckung des Profilstabes bewegt. Der Fräser 5 ist auf einer zumindest entlang einer Raumrichtung bewegbaren und positionierbaren NC Achse angeordnet.

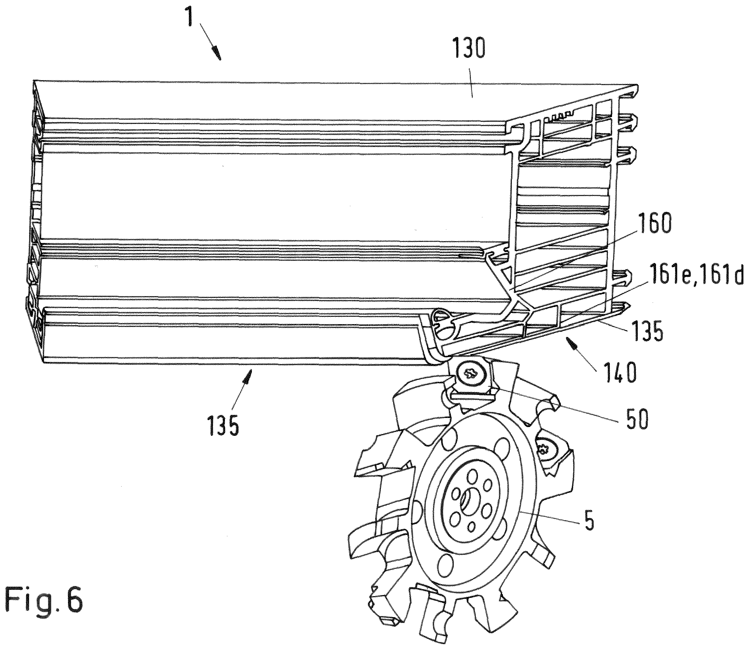

In Figur 6 ist die Lage des Fräswerkzeug 5 zur Sichtoberfläche 135 etwas anders in der Art, dass sich nur die Überstandsfläche 160 (Fläche mit normalen Abbrand) und der Absatz 161d (Fläche ohne Abbrand) bildet.

Ein besonderer Vorzug des Vorschlages liegt in dem Ausführungsbeispiel nach Figur 8. Es ist inzwischen bekannt, auf Kunststoffprofilen Schalen aus Metall, zum Beispiel aus Aluminium anzuordnen und so die Optik eines Metallfensters mit den Vorzügen eines Kunststofffensters zu verbinden. Insbesondere der Einsatz von Aluminiumschalen 19,29 stellt für die zur Bearbeitung der Gehrungsflächen eingesetzten Fräser kein Problem dar, da diese Fräser das relativ weiche Metall Aluminium in gleicher Weise schneiden wie Kunststoff. Die Anordnung ist dabei so gewählt, dass die Abschlusskante der Aluminiumsschale 19,29 mit der rechtwinklig zur Sichtoberfläche 135 verlaufenden Absatzfläche 161f fluchtet. Die übrigen Prozessschritte sind in Figur 8 analog dem in Figur 5b bzw. 7. Es ist natürlich auch klar, dass auf einem Profilende, wie es zum Beispiel in Figur 5b oder 7 gezeigt ist in gleicher Weise auch eine Aluminiumschale aufgesetzt werden kann und die gleichen Vorzüge erreicht werden, wie bei dem hier gezeigten Ausführungsbeispiel.

Es wurde oben ausgeführt, dass die Verringerung der Stegdicke SD am Ende des Profilstabes zu dem günstigen Effekt führt, dass sich der Schweißwulst von selber im Inneren des Profilstabes ausbildet und nicht nach oben quillt. Die Verringerung der Stegdicke führt zu einer endseitigen Schwächung des Profils, genau genommen des außen liegenden Steges oder der Umschließung 120. Eine solche Schwächung, die zu einem bevorzugten Einklappen des Schweißwulstes nach innen führt, ist in Figur 9 gezeigt. Hierzu ist in dem Endbereich der Umschließung 120, rechtwinklig zur Längserstreckung des Profilstabes 100, eine Kerbe vorgesehen, die genau das gleiche leistet wie das Ausführungsbeispiel nach Figur 5b.

Ein Verfahren, das zu einem Bearbeitungsergebnis nach Figur 9 führt, wäre wie folgt strukturiert:
Das Verfahren dient zum Verschweißen eines ersten Profilstabs und eines zweiten Profilstabs, wobei das Verfahren folgende Schritte aufweist:
- Bereitstellen des ersten Profilstabs und des zweiten Profilstabs,
- wobei sich jeder Profilstab entlang seiner jeweiligen Längsachse erstreckt,
- wobei der erste Profilstab einen ersten Innenteil und eine diesen umgebende erste Umschließung aufweist, wobei ein Teil der ersten Umschließung eine erste Sichtoberfläche bildet,
- wobei der zweite Profilstab einen zweiten Innenteil und eine diesen umgebende zweite Umschließung aufweist, wobei ein Teil der zweiten Umschließung eine zweite Sichtoberfläche bildet,
- wobei an einem ersten Endbereich des ersten Profilstabs zumindest eine erste, im wesentlichen parallel zur Gehrungsfläche des Profilstabes orientierte Schwächung, wie z.B eine Nut oder Kerbe angeordnet wird (z. B. eingefräst)
   und/oder
   wobei an einem ersten Endbereich des zweiten Profilstabs zumindest eine zweite, im wesentlichen parallel zur Gehrungsfläche des Profilstabes orientierte Schwächung, wie z.B. eine Nut oder Kerbe angeordnet wird (z. B. eingefräst)
- wobei jeder Endbereich aus einem verschweiß- und/oder schmelzbaren Material ausgebildet ist,
- Aufschmelzen der Endbereich durch Erwärmen, und
- Zusammenbringen des ersten Längsendes und des zweiten Längsendes, so dass die aufgeschmolzenen Endbereich innenseitig eine materialschlüssige Verbindung zwischen dem ersten Profilstab und dem zweiten Profilstab ausbilden, und die erste Sichtoberfläche und die zweite Sichtoberfläche unmittelbar aneinandergrenzen, so dass sie zusammen eine gemeinsame Sichtoberfläche ausbilden.

Mithilfe der Figuren 2 bis 4 wurde das weitere Fügeverfahren beschrieben. Es ist klar, dass die hier beschriebenen Schritte in analoger Weise auch bei den Ausführungsbeispielen nach Figur 5b, 7, 8 und 9 realisiert sind, dem Fachmann ist diese Vorgehensweise hier klar.

## Patentansprüche

1. Verfahren zum Verschweißen eines ersten Profilstabs (100) und eines zweiten Profilstabs (200), wobei das Verfahren folgende Schritte aufweist:
▪ Bereitstellen des ersten Profilstabs (100) und des zweiten Profilstabs (200),
▪ wobei sich jeder Profilstab (100, 200) entlang seiner jeweiligen Längsachse erstreckt,
▪ wobei der erste Profilstab (100) einen ersten Innenteil (110) und eine diesen umgebende erste Umschließung (120) aufweist, wobei ein Teil der ersten Umschließung (120) eine erste Sichtoberfläche (130, 135) bildet,
▪ wobei der zweite Profilstab (200) einen zweiten Innenteil (210) und eine diesen umgebende zweite Umschließung (220) aufweist, wobei ein Teil der zweiten Umschließung (220) eine zweite Sichtoberfläche (230, 235) bildet,
▪ wobei an einem ersten Längsende des ersten Profilstabs (100) zumindest eine erste außenseitige Ausnehmung (140, 145) ausgebildet wird, an welcher die erste Sichtoberfläche (130, 135) axial bezogen auf die Längsachse des ersten Profilstabs (100) hinter einen ersten überstehenden Abschnitt (114) des ersten Innenteils (110) zurückgesetzt ist, und/oder an einem zweiten Längsende des zweiten Profilstabs (200) zumindest eine zweite außenseitige Ausnehmung (240, 245) ausgebildet wird, an welcher die zweite Sichtoberfläche (230, 235) axial bezogen auf die Längsachse des zweiten Profilstabs (200) hinter einen zweiten überstehenden Abschnitt (214) des zweiten Innenteils (210) zurückgesetzt ist,
▪ wobei jeder überstehende Abschnitt (114, 214) aus einem verschweiß- und/oder schmelzbaren Material ausgebildet ist,
▪ Aufschmelzen der überstehenden Abschnitte (114, 214) durch Erwärmen, und
▪ Zusammenbringen des ersten Längsendes und des zweiten Längsendes, so dass die aufgeschmolzenen überstehenden Abschnitte (114, 214) innenseitig eine materialschlüssige Verbindung zwischen dem ersten Profilstab (100) und dem zweiten Profilstab (200) ausbilden, und die erste Sichtoberfläche (130, 135) und die zweite Sichtoberfläche (230, 235) unmittelbar aneinandergrenzen, so dass sie zusammen eine gemeinsame Sichtoberfläche ausbilden,
▪ wobei das Einarbeiten der Ausnehmung (140, 145, 240, 245) durch eine spanabhebende Bearbeitung vor dem Aufschmelzen erfolgt und nach der Bereitstellung der Profilstäbe (100, 200) die Endseite des Profilstabes (100, 200) voraufgeschmolzen wird, wobei beim Voraufschmelzen der Profilstab (100, 200) in einer ersten Anstellbewegung gegen einen Heizspiegel gedrückt wird und danach wieder vom Heizspiegel zurückgezogen wird,
▪ wobei das Verfahren **gekennzeichnet ist durch** den Prozessablauf
∘ Aufspannen der unbearbeiteten Profilstäbe (100, 200), auf Maß und Gehrung geschnitten, aber ohne Ausnehmung (140, 145, 240, 245),
∘ Einarbeiten der Ausnehmung (140, 145, 240, 245),
∘ Voraufschmelzen, wobei das erwärmte, plastifizierte Kunststoffmaterial in transversaler Richtung, insbesondere zur Sichtoberfläche (130, 135, 230, 235) hin ausweicht und sich ein Schweißüberstand bildet,
∘ Entfernen des Schweißüberstandes durch Abfräsen, wobei durch ein mit mindestens einer, bevorzugt mehreren NC Achsen gesteuertes Fräsaggregat genau der Bereich des Kunststoffmateriales weggefräst wird, der hernach einen sichtbaren Schweißwulst (63) ausbilden könnte,
∘ Aufschmelzen,
∘ Fügen.

2. Verfahren nach Anspruch 1, **dadurch gekennzeichnet, dass** nach Ausbilden der formschlüssigen Verbindung zwischen der ersten Sichtfläche (130, 135) und der zweiten Sichtfläche (230, 235) kein aufgeschmolzenes Material vorhanden ist.

3. Verfahren nach einem der vorhergehenden Ansprüche, **dadurch gekennzeichnet, dass** die jeweilige Ausnehmung (140, 145, 240, 245) am Längsende des ersten und/oder zweiten Profilstabes (100, 200) in der Materialdicke der Umschließung (120, 220) ausgeführt wird/ist.

4. Verfahren nach einem der vorhergehenden Ansprüche, **dadurch gekennzeichnet, dass** die Ausnehmung (140, 145, 240, 245) von einer aus mindestens einer Teilfläche (161c, 261c) bestehenden Ausnehmungsendfläche (14) gebildet ist.

5. Verfahren nach einem der vorhergehenden Ansprüche, **dadurch gekennzeichnet, dass** die erste Teilfläche (161c, 261c) der Ausnehmungsendfläche (14) im Wesentlichen rechtwinklig zur Sichtoberfläche (130, 135, 230, 235) angeordnet ist.

6. Verfahren nach einem der vorhergehenden Ansprüche, **dadurch gekennzeichnet, dass** sich an die erste Teilfläche (161c 261c) unter einem stumpfen Winkel eine zweite Teilfläche anschließt, die, mittelbar oder unmittelbar, an die endseitige Begrenzungsfläche (160, 260) des überstehenden Abschnittes (114, 214) anschließt.

7. Verfahren nach einem der vorhergehenden Ansprüche, **dadurch gekennzeichnet, dass** der erste und zweite Profilstab (100, 200) nach deren Bereitstellung je von einer, längs einer Bewegungsrichtung bewegbaren Aufspannvorrichtung aufgespannt wird und diese Aufspannung während des Verschweißens nicht verändert wird.

8. Verfahren nach einem der vorhergehenden Ansprüche, **dadurch gekennzeichnet, dass** die jeweilige Sichtoberfläche (130, 135, 230, 235) der Profilstäbe (100, 200) zumindest teilweise von einer Schale, vorzugsweise einer Aluminiumschale (19, 29) verdeckt ist und das Ende der Schale mit der ersten Teilfläche (161c, 261c) fluchtet.

9. Verfahren nach Anspruch 8, **dadurch gekennzeichnet, dass** sich die Schale über Abstützelemente auf der Sichtoberfläche (130, 135, 230, 235) abstützt und eine zusätzliche Abtragung am Profilstabende im Bereich der Abstützelemente eingearbeitet wird.

10. Verfahren nach einem der vorhergehenden Ansprüche, **dadurch gekennzeichnet, dass** die erste Sichtoberfläche (130, 135) und die zweite Sichtoberfläche (230, 235) während des Verfahrens unverändert bleiben.

11. Verfahren nach einem der vorhergehenden Ansprüche, **dadurch gekennzeichnet, dass** die erste außenseitige Ausnehmung (140, 145) eine axiale Länge zwischen 1 mm und 4 mm aufweist und/oder die zweite außenseitige Ausnehmung (240, 245) eine axiale Länge zwischen 1 mm und 4 mm aufweist.

12. Verfahren nach einem der Ansprüche 1 bis 10, **dadurch gekennzeichnet, dass** der Endbereich der Profilstäbe (100, 200) einen rechtwinkligen Absatz (161d) aufweist und der axiale Überstand der endseitigen Begrenzungsfläche (160) gegenüber dem Absatz (161d) einige Millimeter bis zu wenigen Zentimetern, zum Beispiel 0,5 mm, 1 cm, 1,5 cm, 2 cm beträgt.

13. Verfahren nach einem der vorhergehenden Ansprüche, **dadurch gekennzeichnet, dass** der erste Innenteil (110) aus einer Mehrzahl von zueinander winklig angeordneten ersten Innenflächen (112) gebildet ist, und/oder der zweite Innenteil (210) aus einer Mehrzahl von zueinander winklig angeordneten zweiten Innenflächen (212) gebildet ist.

14. Verfahren nach einem der vorhergehenden Ansprüche, **dadurch gekennzeichnet, dass**
▪ ein Teil der ersten Umschließung (120) eine weitere erste Sichtoberfläche (130, 135) bildet, welche der ersten Sichtoberfläche (130, 135) gegenüberliegt,
▪ ein Teil der zweiten Umschließung (220) eine weitere zweite Sichtoberfläche (230, 235) bildet, welche der zweiten Sichtoberfläche (230, 235) gegenüberliegt,
▪ an dem ersten Längsende des ersten Profilstabs (100) eine weitere erste außenseitige Ausnehmung (140, 145) ausgebildet ist, an welcher die weitere erste Sichtoberfläche (130, 135) axial bezogen auf die Längsachse des ersten Profilstabs (100) hinter den ersten überstehenden Abschnitt (114) des ersten Innenteils (110) zurückgesetzt ist, und/oder an dem zweiten Längsende des zweiten Profilstabs (200) eine weitere zweite außenseitige Ausnehmung (240, 245) ausgebildet ist, an welcher die weitere zweite Sichtoberfläche (230, 235) axial bezogen auf die Längsachse des zweiten Profilstabs (200) hinter einen zweiten überstehenden Abschnitt (214) des zweiten Innenteils (210) zurückgesetzt ist, und nach dem Ausbilden der materialschlüssigen Verbindung die weitere erste Sichtoberfläche (130, 135) und die weitere zweite Sichtoberfläche (230, 235) unmittelbar aneinandergrenzen, so dass sie zusammen eine weitere gemeinsame Sichtoberfläche ausbilden.

## Claims

1. Method of welding a first profiled bar (100) and a second profiled bar (200), the method comprising the following steps:
▪ providing the first profiled bar (100) and the second profiled bar (200),
▪ wherein each profile bar (100, 200) extends along its respective longitudinal axis,
▪ wherein the first profiled bar (100) has a first inner part (110) and a first enclosure (120) surrounding it, wherein a part of the first enclosure (120) forms a first visible surface (130, 135),
▪ wherein the second profiled bar (200) has a second inner part (210) and a second enclosure (220) surrounding it, wherein a part of the second enclosure (220) forms a second visible surface (230, 235),
▪ wherein at least one first external recess (140, 145) is formed at a first longitudinal end of the first profiled bar (100), at which recess the first visible surface (130, 135) is set back axially with respect to the longitudinal axis of the first profiled bar (100) behind a first projecting section (114) of the first inner part (110), and/or at least one second external recess (240, 245) is formed at a second longitudinal end of the second profiled bar (200), at which recess the second visible surface (230, 235) is set back axially in relation to the longitudinal axis of the second profiled bar (200) behind a second projecting section (214) of the second inner part (210),
▪ wherein each projecting portion (114, 214) is formed from a weldable and/or fusible material,
▪ melting of the protruding sections (114, 214) by heating, and
▪ bringing the first longitudinal end and the second longitudinal end together so that the fused-on projecting sections (114, 214) form a material-locking connection on the inside between the first profiled bar (100) and the second profiled bar (200), and the first visible surface (130, 135) and the second visible surface (230, 235) directly adjoin one another so that together they form a common visible surface,
▪ wherein the recess (140, 145, 240, 245) is formed by machining prior to melting and, after the profiled bars (100, 200) have been provided, the end side of the profiled bar (100, 200) is pre-melted, wherein during pre-melting the profiled bar (100, 200) is pressed against a heating surface in a first adjusting movement and is then withdrawn again from the heating surface,
▪ wherein the method is **characterised by** the process sequence
∘ clamping of unmachined profile bars (100, 200), cut to size and mitred, but without recess (140, 145, 240, 245),
∘ incorporating the recess (140, 145, 240, 245),
∘ pre-melting, whereby the heated, plasticised plastic material evaporates in a transverse direction, in particular towards the visible surface (130, 135, 230, 235) and a weld protrusion is formed,
∘ removing of the welding protrusion by milling, whereby a milling unit controlled by at least one, preferably several NC axes mills away precisely the area of the plastic material that could subsequently form a visible welding bead (63),
∘ melting,
∘ joining.

2. Method according to claim 1, **characterised in that** no molten material is present between the first visible surface (130, 135) and the second visible surface (230, 235) after the positive connection has been formed.

3. Method according to one of the preceding claims, **characterised in that** the respective recess (140, 145, 240, 245) at the longitudinal end of the first and/or second profiled bar (100, 200) is/are designed in the material thickness of the enclosure (120, 220).

4. Method according to one of the preceding claims, **characterised in that** the recess (140, 145, 240, 245) is formed by a recess end surface (14) consisting of at least one partial surface (161c, 261c).

5. Method according to one of the preceding claims, **characterised in that** the first partial surface (161c, 261c) of the recess end surface (14) is arranged substantially at right angles to the visible surface (130, 135, 230, 235).

6. Method according to one of the preceding claims, **characterised in that** the first partial surface (161c, 261c) is adjoined at an obtuse angle by a second partial surface which adjoins, directly or indirectly, the end boundary surface (160, 260) of the projecting portion (114, 214).

7. Method according to one of the preceding claims, **characterised in that** the first and second profiled bars (100, 200) are each clamped by a clamping device movable along a direction of movement after they have been provided and this clamping is not changed during welding.

8. Method according to one of the preceding claims, **characterised in that** the respective visible surface (130, 135, 230, 235) of the profiled bars (100, 200) is at least partially covered by a shell, preferably an aluminium shell (19, 29), and the end of the shell is aligned with the first partial surface (161c, 261c).

9. Method according to claim 8, **characterised in that** the shell is supported on the visible surface (130, 135, 230, 235) via support elements and an additional ablation is incorporated at the end of the profile bar in the region of the support elements.

10. Method according to one of the preceding claims, **characterised in that** the first visible surface (130, 135) and the second visible surface (230, 235) remain unchanged during the method.

11. Method according to one of the preceding claims, **characterised in that** the first external recess (140, 145) has an axial length of between 1 mm and 4 mm and/or the second external recess (240, 245) has an axial length of between 1 mm and 4 mm.

12. Method according to one of claims 1 to 10, **characterised in that** the end region of the profiled bars (100, 200) has a right-angled shoulder (161d) and the axial projection of the end boundary surface (160) relative to the shoulder (161d) is a few millimetres to a few centimetres, for example 0.5 mm, 1 cm, 1.5 cm, 2 cm.

13. Method according to one of the preceding claims, **characterised in that** the first inner part (110) is formed from a plurality of first inner surfaces (112) arranged at an angle to one another, and/or the second inner part (210) is formed from a plurality of second inner surfaces (212) arranged at an angle to one another.

14. Method according to one of the preceding claims, **characterised in that**
▪ a part of the first enclosure (120) forms a further first viewing surface (130, 135) which is opposite the first viewing surface (130, 135),
▪ a part of the second enclosure (220) forms a further second viewing surface (230, 235) which is opposite the second viewing surface (230, 235),
▪ a further first external recess (140, 145) is formed at the first longitudinal end of the first profiled bar (100), at which recess the further first visible surface (130, 135) is set back axially with respect to the longitudinal axis of the first profiled bar (100) behind the first projecting section (114) of the first inner part (110), and/or a further second external recess (240, 245) is formed at the second longitudinal end of the second profiled bar (200), at which the further second visible surface (230, 235) is set back axially in relation to the longitudinal axis of the second profiled bar (200) behind a second projecting section (214) of the second inner part (210), and after the formation of the material-locking connection, the further first visible surface (130, 135) and the further second visible surface (230, 235) directly adjoin one another, so that together they form a further common visible surface.

## Revendications

1. Procédé de soudage d'une première barre profilée (100) et d'une deuxième barre profilée (200), le procédé comprenant les étapes suivantes :
▪ fournir la première barre profilée (100) et la deuxième barre profilée (200),
▪ chaque barre profilée (100, 200) s'étendant le long de son axe longitudinal respectif,
▪ dans lequel la première barre profilée (100) comprend une première partie intérieure (110) et une première enceinte (120) entourant celle-ci, une partie de la première enceinte (120) formant une première surface visible (130, 135),
▪ dans lequel la deuxième barre profilée (200) comprend une deuxième partie intérieure (210) et une deuxième enceinte (220) entourant celle-ci, une partie de la deuxième enceinte (220) formant une deuxième surface visible (230, 235),
▪ au moins un premier évidement extérieur (140, 145) étant réalisé à une première extrémité longitudinale de la première barre profilée (100), au niveau duquel la première surface visible (130, 135) est en retrait, axialement par rapport à l'axe longitudinal de la première barre profilée (100), derrière une première section en saillie (114) de la première partie intérieure (110), et/ou à une deuxième extrémité longitudinale de la deuxième barre profilée (200) est formé au moins un deuxième évidement (240, 245) côté extérieur, au niveau duquel la deuxième surface visible (230, 235) est en retrait axialement par rapport à l'axe longitudinal de la deuxième barre profilée (200) derrière une deuxième section en saillie (214) de la deuxième pièce intérieure (210),
▪ chaque partie en saillie (114, 214) étant formée d'un matériau soudable et/ou fusible,
▪ la fusion des parties en saillie (114, 214) par chauffage, et
▪ le rapprochement de la première extrémité longitudinale et de la deuxième extrémité longitudinale, de sorte que les tronçons (114, 214) en saillie fondus forment du côté intérieur une liaison par complémentarité de matière entre la première barre (100) profilée et la deuxième barre (200) profilée, et la première surface (130, 135) visible et la deuxième surface (230, 235) visible sont directement contiguës, de sorte qu'elles forment ensemble une surface visible commune,
▪ l'usinage de l'évidement (140, 145, 240, 245) étant effectué par un usinage par enlèvement de copeaux avant la fusion et, après la mise à disposition des barres profilées (100, 200), le côté d'extrémité de la barre profilée (100, 200) étant pré-fusionné, la barre profilée (100, 200) étant, lors de la pré-fusion, pressée dans un premier mouvement d'approche contre un miroir chauffant et étant ensuite à nouveau retirée du miroir chauffant,
▪ le procédé étant **caractérisé par** le déroulement du processus
∘ serrage des barres profilées non usinées (100, 200), coupées sur mesure et en onglet, mais sans évidement (140, 145, 240, 245),
∘ réalisation de l'évidement (140, 145, 240, 245),
∘ pré-fusion, la matière plastique plastifiée chauffée se déformant dans la direction transversale, en particulier vers la surface visible (130, 135, 230, 235), et un surplus de soudure se formant,
∘ élimination de l'excédent de soudure par fraisage, un agrégat de fraisage commandé par au moins un, de préférence plusieurs axes NC, éliminant par fraisage exactement la zone du matériau plastique qui pourrait former ensuite un bourrelet de soudure visible (63),
∘ fusionner,
∘ jointer.

2. Procédé selon la revendication 1, **caractérisé en ce qu'**aucun matériau fondu n'est présent après la formation de la liaison par complémentarité de forme entre la première surface visible (130, 135) et la deuxième surface visible (230, 235).

3. Procédé selon l'une des revendications précédentes, **caractérisé en ce que** l'évidement respectif (140, 145, 240, 245) à l'extrémité longitudinale de la première et/ou de la deuxième barre profilée (100, 200) est/est réalisé(s) dans l'épaisseur de matériau de l'enveloppe (120, 220).

4. Procédé selon l'une des revendications précédentes, **caractérisé en ce que** l'évidement (140, 145, 240, 245) est formé par une face d'extrémité d'évidement (14) constituée d'au moins une surface partielle (161c, 261c).

5. Procédé selon l'une quelconque des revendications précédentes, **caractérisé en ce que** la première partie de surface (161c, 261c) de la surface d'extrémité (14) de l'évidement est disposée sensiblement perpendiculairement à la surface de visualisation (130, 135, 230, 235).

6. Procédé selon l'une des revendications précédentes, **caractérisé en ce qu'**à la première surface partielle (161c 261c) se rattache, sous un angle obtus, une deuxième surface partielle qui se rattache, directement ou indirectement, à la surface de délimitation d'extrémité (160, 260) de la section en saillie (114, 214).

7. Procédé selon l'une des revendications précédentes, **caractérisé en ce que** la première et la deuxième barre profilée (100, 200) sont serrées, après leur mise à disposition, chacune par un dispositif de serrage mobile le long d'une direction de déplacement et **en ce que** ce serrage n'est pas modifié pendant le soudage.

8. Procédé selon l'une des revendications précédentes, **caractérisé en ce que** la surface visible respective (130, 135, 230, 235) des barres profilées (100, 200) est au moins partiellement recouverte par une coque, de préférence une coque en aluminium (19, 29), et l'extrémité de la coque est alignée avec la première surface partielle (161c, 261c).

9. Procédé selon la revendication 8, **caractérisé en ce que** la coque s'appuie sur la surface visible (130, 135, 230, 235) par l'intermédiaire d'éléments d'appui et **en ce qu'**un enlèvement de matière supplémentaire est incorporé à l'extrémité de la barre profilée dans la zone des éléments d'appui.

10. Procédé selon l'une quelconque des revendications précédentes, **caractérisé en ce que** la première surface de visualisation (130, 135) et la deuxième surface de visualisation (230, 235) restent inchangées pendant le procédé.

11. Procédé selon l'une quelconque des revendications précédentes, **caractérisé en ce que** le premier évidement extérieur (140, 145) présente une longueur axiale comprise entre 1 mm et 4 mm et/ou le deuxième évidement extérieur (240, 245) présente une longueur axiale comprise entre 1 mm et 4 mm.

12. Procédé selon l'une des revendications 1 à 10, **caractérisé en ce que** la zone d'extrémité des barres profilées (100, 200) présente un épaulement (161d) à angle droit et **en ce que** la saillie axiale de la surface de délimitation (160) côté extrémité par rapport à l'épaulement (161d) est de quelques millimètres à quelques centimètres, par exemple 0,5 mm, 1 cm, 1,5 cm, 2 cm.

13. Procédé selon l'une quelconque des revendications précédentes, **caractérisé en ce que** la première partie interne (110) est formée d'une pluralité de premières surfaces internes (112) disposées angulairement les unes par rapport aux autres, et/ou la seconde partie interne (210) est formée d'une pluralité de secondes surfaces internes (212) disposées angulairement les unes par rapport aux autres.

14. Procédé selon l'une quelconque des revendications précédentes, **caractérisé en ce que**
▪ une partie de la première enceinte (120) forme une autre première surface de visualisation (130, 135) qui est opposée à la première surface de visualisation (130, 135),
▪ une partie de la seconde enceinte (220) forme une autre seconde surface de visualisation (230, 235) qui est opposée à la seconde surface de visualisation (230, 235),
▪ à la première extrémité longitudinale de la première barre profilée (100) est formé un autre premier évidement extérieur (140, 145), auquel l'autre première surface visible (130, 135) est en retrait axialement par rapport à l'axe longitudinal de la première barre profilée (100) derrière la première section en saillie (114) de la première partie intérieure (110), et/ou à la deuxième extrémité longitudinale de la deuxième barre profilée (200) est formé un autre deuxième évidement extérieur (240, 245), au niveau de laquelle l'autre deuxième surface visible (230, 235) est en retrait, axialement par rapport à l'axe longitudinal de la deuxième barre profilée (200), derrière une deuxième section en saillie (214) de la deuxième partie intérieure (210), et après la formation de la liaison par coopération de matière, l'autre première surface visible (130, 135) et l'autre deuxième surface visible (230, 235) sont directement adjacentes l'une à l'autre, de sorte qu'elles forment ensemble une autre surface visible commune.
